# EUROPEAN PATENT SPECIFICATION

(11) **EP 2 151 064 B1**
(45) Date of publication and mention of the grant of the patent: **24.06.2015**
(21) Application number: 08825935.3
(22) Date of filing: 05.05.2008
(51) Int. Cl.: H04B 1/40, G06F 3/048, H04M 1/725

(54) **METHOD FOR REMOTELY CONFIGURING USER INTERFACES FOR PORTABLE DEVICES**
VERFAHREN ZUR REMOTE-KONFIGURATION VON BENUTZEROBERFLÄCHEN FÜR TRAGBARE VORRICHTUNGEN
PROCÉDÉ POUR CONFIGURER À DISTANCE DES INTERFACES UTILISATEUR POUR DES DISPOSITIFS PORTATIFS

(30) Priority: 03.05.2007 US 915735 P
(43) Date of publication of application: 10.02.2010
(73) Proprietor: 3DLABS INC., LTD., Hamilton, HM11 (BM)
(72) Inventor: LEOW, Chon Hock, Menlo Park, California 94025 (US)
(74) Representative: Talbot-Ponsonby, Daniel Frederick
(86) International application number: PCT/US2008/062712
(87) International publication number: WO 2008/156923

(56) References cited:
- WO-A1-2005/022375
- KR-A- 20030 006 260
- KR-A- 20040 006 883
- KR-A- 20050 114 863
- US-A1- 2004 051 737
- US-A1- 2006 068 834
- US-A1- 2006 148 426

## Description

### BACKGROUND OF THE INVENTION

### 1. Field of the Invention

The present invention relates to user interfaces. More particularly, the present invention relates to methods for configuring user interfaces on portable devices.

### 2. Description of the Related Art

Users of mobile phones and other portable media devices are often provided with a panoply of functions available to the user on the device. These portable devices often have display screens, such as LCD screens used to apprise the user of various settings and applications available on the device. Icons are often used to help the user navigate through the mobile device settings, tools, and data sources. Unfortunately, most users at a particular time only desire to access a small subset of the device's settings, tools, and other functions. Oftentimes, these functions are available only after the user navigates several higher levels of the visual hierarchy. That is, the functions the user wants aren't readily accessible and are often hidden in a hierarchy of display screens. For example, they may be difficult to find because they are camouflaged by numerous unwanted functions/icons. Unfortunately, most portable electronic devices provide the user with only very limited flexibility to reconfigure the user interface to his liking.

What is desired is an improved method for allowing users to create the user interface desired.

US2004/051737 discloses a method and system of interface editing and on-line real time accessing for a mobile personal device.

### SUMMARY OF THE INVENTION

To achieve the foregoing, the present invention provides a method of configuring the user interface of a portable electronic device from a remote server.

In accordance with one embodiment, a method of configuring the user interface of a portable electronic device is provided in accordance with Claim 1.

Also disclosed herein are methods in which a remote server is accessed. The remote server may be a web page with accessible authoring tools. The remote server file provides interactive instructions for the design of a portable device user interface. By accessing the tools available from the web page, the user customizes the design of the user interface. The customized design at least includes selecting at least one icon and selecting the appearance position of the icon in a hierarchy of display screens. Preferably, the customized design is assigned to a user template. The template is stored at the remote server. The device accesses the stored file over the internet and updates its user interface configuration.

Also disclosed herein is a method of configuring the user interface of a portable electronic device includes using the portable device to communicate with a remote server that contains at least one user interface template previously customized for the unique portable electronic device. A user interface template is selected from a grouping having at least one user interface templates. The selected user interface template is downloaded to the portable device, wherein after downloading the portable device user interface is configured in conformance with the customized design corresponding to the selected user interface template.

In accordance with another embodiment of the invention there is provided a portable electronic device according to claim 13.

These and other features and advantages of the present invention are described below with reference to the drawings.

### BRIEF DESCRIPTION OF THE DRAWINGS

FIG. 1 is a flow diagram illustrating a method of configuring a user interface in accordance with one embodiment of the present invention.
FIG. 2 is a diagram illustrating examples user interface display options available in accordance with one embodiment of the present invention.
FIG. 3 is a diagram illustrating a system for modifying a user interface of a portable device in accordance with one embodiment of the present invention.
FIG. 4 is a diagram illustrating user interface options for a portable device in accordance with one embodiment of the present invention.

### DETAILED DESCRIPTION OF PREFERRED EMBODIMENTS

Reference will now be made in detail to preferred embodiments of the invention. Examples of the preferred embodiments are illustrated in the accompanying drawings. While the invention will be described in conjunction with these preferred embodiments, it will be understood that it is not intended to limit the invention to such preferred embodiments. In the following description, numerous specific details are set forth in order to provide a thorough understanding of the present invention. The present invention may be practiced without some or all of these specific details. In other instances, well known mechanisms have not been described in detail in order not to unnecessarily obscure the present invention.

It should be noted herein that throughout the various drawings like numerals refer to like parts. The various drawings illustrated and described herein are used to illustrate various features of the invention. To the extent that a particular feature is illustrated in one drawing and not another, except where otherwise indicated or where the structure inherently prohibits incorporation of the feature, it is to be understood that those features may be adapted to be included in the embodiments represented in the other figures, as if they were fully illustrated in those figures. Unless otherwise indicated, the drawings are not necessarily to scale. Any dimensions provided on the drawings are not intended to be limiting as to the scope of the invention but merely illustrative.

Many features of a user interface are contemplated and configured by the manufacture for the universal use of the device. Unfortunately, users presently are not able to design or configure the user interfaces of portable electronic devices. That is, configuration changes for a mobile phone (MP), or handheld media devices like the Creative Zen or an iPOD is not available to the user except for some basic options, that is, adding or deleting pre-defined functions.

Moving forward, as the mobile phones and personal digital entertainment (PDE) devices incorporate more connectivity like USB-OTG, Wifi, Wimax, WAN like 3G, HSDPA etc. and technologies like GPS, DVB-H, the pre-defined menu may not suit the user. To configure these devices from the PC is also limiting as the PC needs to have the application loaded on the PC.

The present invention in several embodiments provides a solution to this problem. By using a communications link to a predefined URL corresponding to a remote server, the user configures his MP/PDE interface and properties on a personalized page on the web. This can be done using any device that has a web interface. The stored configuration may then be accessed by the device. For example, the communications link for updating the device is established in one embodiment by the mobile phone's (MP), or personal digital entertainment device's (PDE's) connectivity to the internet. The device may connect directly through a router or indirectly through a PC. Preferably, the MP/PDE device is configured such that it will automatically connect to a pre-defined uniform resource locator (URL). This pre-defined URL in one embodiment is preset at the factory or systems integrator (SI) or reseller or a technical consultant. The MP/PDE has a unique ID for connecting to the URL. When connected, the PDE takes the user to his/her own page.

The present invention embodiments provide a method and system for configuring user interfaces for presentation to a user on portable electronic devices such as a personal digital assistant (PDA), mobile phone, or personal digital entertainment device (PDE). Preferably, these are configured using a remote server. In accordance with one embodiment, a method of configuring the user interface of a portable electronic device is provided. A remote server is accessed. The remote server may be a web page with accessible authoring tools. The remote server file provides interactive instructions for the design of a portable device user interface. By accessing the tools available from the web page, the user customizes the design of the user interface.

The present invention is intended to be used without limitation with all forms of user interfaces. User interfaces on portable devices may be defined in a variety of ways. For example, the user interface may be defined in one or more user interface definition files. These files mainly hold the look and feel generated by the device. The files defining the look and feel of the user interface are preferably designed using the authoring tools on a remote server, the functioning of the customized UI verified using simulations provided on the remote server, and the configuration or template corresponding to the customized UI downloaded to the device over a communication link between the device and the web site (i.e., the remote server).

The software that generates a user interface varies in complexity from application to application. The scope of the present invention is intended to cover all forms of user interfaces without limitation: The following example of user interface definition files is intended to be merely illustrative of one type of definition and is not intended to be limiting.

User interface definition files may vary in size. For example, the user interface definition files for a portable media player (PMP) may be quite large as there are many screens, popup menus, views, etc. to define.

In some applications, the user interface is defined as a collection of graphical elements referred to as widgets. Widgets are user interface components that take up screen space. These may be of various types such as a box, text, font, color, table, icon, photo, etc. User interface components typically have two parts: a set of properties and a set of behaviors, e.g., how it responds to events such as a user depressing a button on the device. Example properties for a widget include its position, size, and visibility.

The screens that make up the user interface form part of a visual hierarchy where widgets contain other widgets, etc. The hierarchy plays two important organizational roles: It determines the drawing order and the order the widgets see the events (key presses).

A table widget presents a one or two dimensional table of scrollable data for the user to browse and select. A table widget holds the list of menu items and a slider widget holds the scroll bar, if needed by the table. The contents to be displayed are provided by a data source such as a fixed list of items A common user interface paradigm for devices with very limited input capability (just buttons with no mouse or touch screen) is to present the user with a one or two dimensional list of text and/or icons to navigate around. The list will scroll vertically, if necessary, and an action is performed by pressing a non navigation key.

Other examples of widgets include an icon widget which displays an image (from, for example, a jpg file) within the rectangular region defined by the widget. The image can be positioned within the rectangular region. The text widget will display one line of text within the rectangular region defined by the widget. The slider widget will display a linear slider or scroll bar where a slider moves over a background image to emulate a physical slider control. Sliders can also be used to show the position within a table of the displayed items; to emulate a slider control for graphics equalizer, volume, etc.; and as a progress indicator, perhaps to show how much of a song has been played.

While it is expected that the user customization of the user interface using the remote server will include the selection of icons and the association of these icons with the visual hierarchy displayed, i.e., association of the widget or icon with a particular display screen in a sequence of display screens, the invention is not so limited. Other functions can be defined in a user interface using the tools on the remote server. For example, selecting in a first-screen a menu item generates another screen corresponding to the selection. A number of visual effects can be used to make the transition from one screen to another more interesting. These effects are numerous and can include: none, dissolve , and slide Down. In one embodiment, visual effects such as these can be selected by the user at the remote server. In fact, there is no limitation as to the user interface design effects that can be selected or determined by the user through the remote server and its tools.

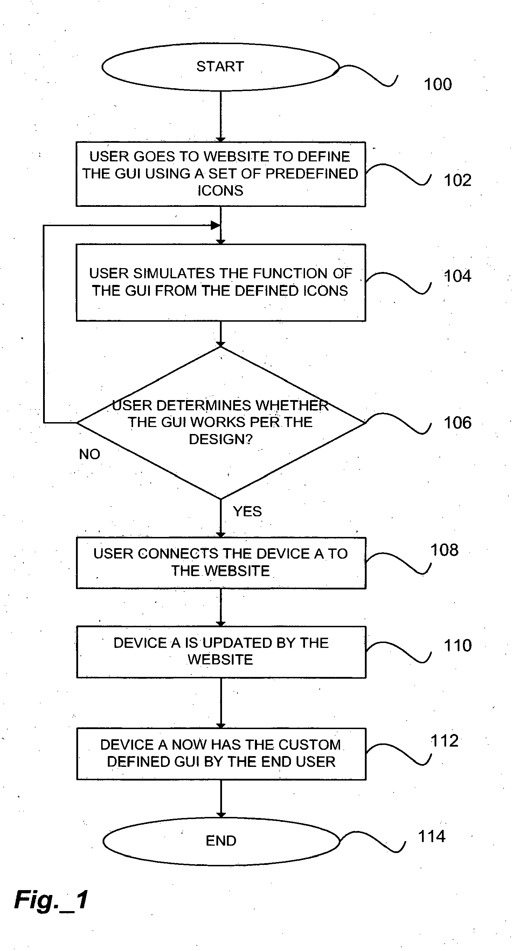

FIG. 1 is a flow diagram illustrating a method of configuring a user interface in accordance with one embodiment of the present invention. The method commences at operation 100. In operation 102, the user first defines how he wants the device to appear, using tools on the web. Preferably, the user's choices involve the use of a set of predefined icons. For example, in configuring a mobile phone, some of the predefined icons available may include a picture folder, a phonebook, a phonebook subdirectory, ring volume, etc.

At the website, the user defines the look and feel of the device user interface, preferably involving in one embodiment at least selecting predefined icons to simulate desired functions. User interfaces for portable electronic devices often involve an LCD display screen and present menus and other options to the user through a sequence of display screens. That is, the user interface often involves a visual hierarchy. The user customizes the visual hierarchy using the web site tools and then accesses (for updating) the stored user interface definition file or other configuration file or template by using a communications link between the device and the remote server web site. In this way the user interface of the device is updated.

Next, in operation 104, the user simulates the function of the GUI from the defined icons. By determining which icons appear and/or don't appear on which display screens, a customized UI representation may be defined and simulated.

The user determines in operation 106 whether the graphical user interface (GUI) works as intended by the user-designer. If the simulation is not successful, i.e., the user determines that he doesn't like the simulated functioning of the GUI, the process flow returns to operation 104 where the user maneuvers the selected icons to change the visual functioning of the GUI. The process flow may even return to selecting further predefined icons or deleting some of the icons previously selected by the user.

If the user determines in operation 106 that the device user interface functions and displays as intended, the configuration designed by the user is saved on the website. It is preferred that only users will have access to their customized designs, hence access to the customized design may be limited by user ID's, passwords, or any other suitable means familiar to those of skill in the relevant arts. The website may be set up such that the user may store only one configuration. More preferably, the user is enabled to store a plurality of configurations or templates. For example, where the portable electronic device is a mobile phone, the user may want to define several templates for different uses. He may have a vacation template, wherein the primary access in the user interface is provided for restaurants, hotels, and activities at the vacation location. There may be a second template provided for "Business trip A" which includes selection, positioning, and ordering of icons and other interface features customized for the business trip A needs and contacts. There may be a third template that defines the user interface features and priorities in normal business and a fourth customized for socializing uses.

As noted above, the configuration of the user interface may be derived from a stored user interface definition file. The process flow proceeds to operation 108 wherein the device is connected to the website.

In operation 108, the user connects the device to the website where the configuration or template(s) is stored. The communications link between the portable device and the website where the customized configuration or templates are located may be any suitable link. That is, the device may communicate indirectly through a PC to the internet or more preferably directly, such a by using a WiFi connection or, in the case of a mobile phone, a wireless 3G data connection. The portable device is preferably configured with the URL for the website where the tools are provided. This configuration of the device for automatic access to the URL may be provided at any time in the product development process such as by the manufacturer or systems integrator or reseller or a technical consultant. For that matter, the URL may be provided even after sale to the consumer, for example in a firmware update or as an option by an independent 3^{rd} party.

The device is then updated by the website in operation 110. Where only one configuration is stored , the website and device may be configured such that updating occurs automatically upon access to the website by the device. Alternatively, where a plurality of configurations or templates are store at the website, the user may be prompted for an input selection from the plurality.

In operation 112, the updating of the device is complete and the custom defined GUI functions on the device. The method ends at operation 114.

In one embodiment, selecting the user interface template also involves the gathering and presentation of associated data that appears on the display screen of the user interface of the portable device when in use. For a non-limiting example, when traveling, a user might want to select a user interface template customized by geographical location. Fro example, a user might select a "London" template and with that, a customized list of London business contacts that appear in connection with a "phone directory" icon that appears on the center of the screen of the portable device.

In another embodiment; the portable device and system are configured to provide automatic updating of at least one of the user's customized UI templates such as a "business travel" template. According to this method the portable device automatically determines its worldwide location, for example in the case of a mobile phone through GPS coordinates or some cellphone network identification. Once the portable device determines that it has moved to a location that is a preselected distance from the last used location, a query is run to determine if a user template for the new location is provided in the stored user interface templates. If so, the new template is loaded, preferably from the server by alternatively in local storage in the device.

In yet another one embodiment, the portable device may be configured to provide updates of associated data presented in the UI display screens. For example, after the user has selected a UI template, the portable device may be configured to automatically access stored data to populate the lists associated with icons. For example, the business travel template could automatically (when the user has activated this mode) download from the remote server a top twenty list of restaurants to associate with the restaurant icon that appears in the top left of the "business travel" template, the top twenty list preferably matching the location of the portable device, the location information preferably automatically provided by the device. Those of ordinary skill in the relevant arts will be familiar with methods for identifying present locations of portable devices including through the use of GPs (Global Position System) receivers and hence complete details will not be provided herein.

The same automatic updating to fill the user's selected template could apply to typical business traveler needs such as "lodging lists" (either generic lists of hotels or the user's customized picks). In the preferred embodiment, the automatic updating wouldn't need to access the remote server but could instead be used as a filter to locally stored contacts, restaurants, lodging , entertainment, etc. Of course, in another embodiment, the associated traveler information such as contacts, restaurants, lodging , entertainment, etc. is obtained by the portable device form the remote server where the user interface templates are created and stored..

For a nonlimiting example as to illustrating the use of this embodiment, as a traveler changes cities, for example flying from New York London, and the traveler had preselected the "business travel" template, the content associated with the displayed icons would change when the device detected the new location. Further, when the traveler embarked form London to another location, for example a vacation in Thailand, he would use the device to access from the remote server device a "recreational travel" template that would include a different UI presentation, for example, that included a large icon for tourist sites.

Of course, the scope of the invention also covers situations where the unique user interfaces customized for the unique portable device are created by people other than the user. For example, a user's assistant or associate may create a unique user interface template for the user and load or save it onto the remote server for access by the user. In this way, emergency travel situations can be accommodated by the remote access. For example, the user may be given last minute traveling orders without time to generate a custom user interface for the new travel destination. Here, the associate can load or save a newly generated user interface template, for example, when the user is traveling, such as in distant airline travel. When the user disembarks from the plane, he can then access the newly generated or saved UI from the remote server. Access to the remote server for the unique portable device is preferably provided by a unique ID associated with the portable device.

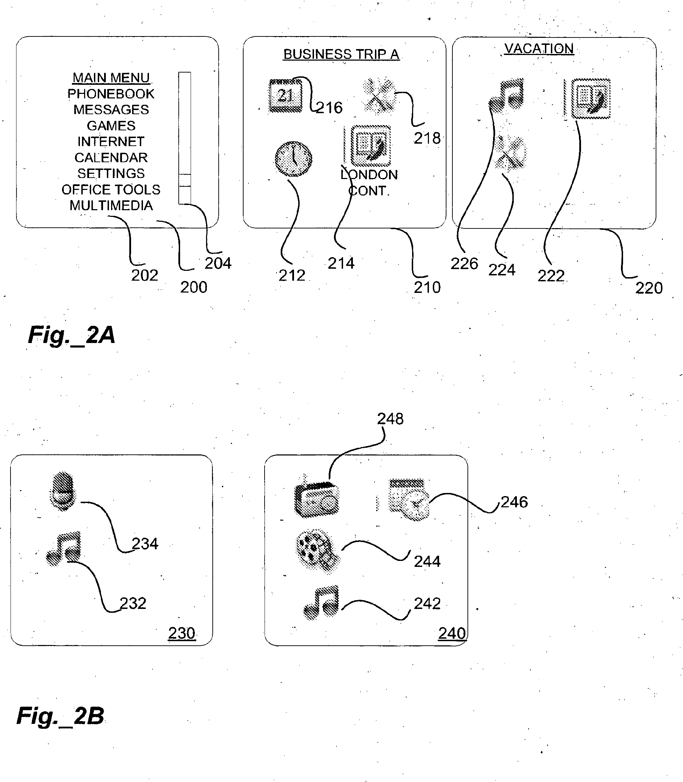

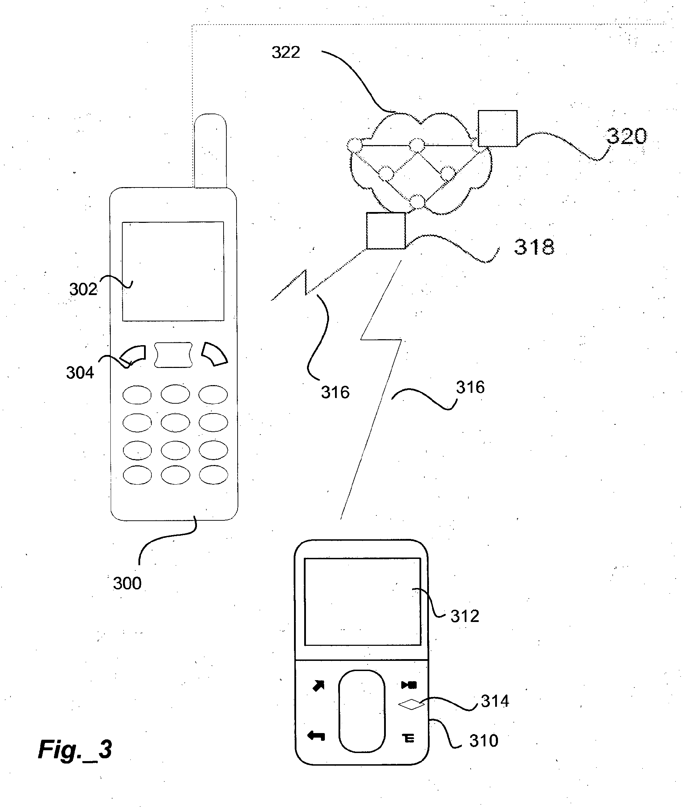

FIG. 2A illustrates example user interface display screens 200, 210, and 220 such as might be applicable on a display 302 of a mobile phone such as illustrated in FIG. 3A. By configuring the user interface in the manner described, the user can specify one or more templates for storage on the personalized website for updating the mobile phone. For example, FIG. 2A illustrates a table type main menu in screen 200, with multiple text entries 202 shown and visual access to others provided by a slider 204. In accordance with the present invention, a user can configure a plurality of templates on the remote server so that the mobile phone user interface can be reconfigured on the fly using a connection from the device to the internet and the remote server. For a non-limiting example, a first or main screen 210 may be the user's choice for use on a business trip. This main screen includes icons representing readily used functions/operations on the business trip such as a calendar 216, restaurants 218, an alarm clock 212, and contacts at the business destination 214. Alternatively, a "vacation" user interface configuration can include a main screen 220 that includes icons for quick access to restaurants 224 (phone numbers) at the vacation destination, stored music 226, and a predefined phone subdirectory 222. In this way, the user can access the stored templates or user interface definition files at any point, even arrival at the airport of the destination. In a preferred embodiment, the templates are accessed over the internet. Alternatively, and somewhat depending on the device storage capabilities, the templates may be stored locally on the device. FIG. 2B illustrates example user interface display screens 230 and 240 such as might be applicable on a display 312 of a portable media player such as player 310 illustrated in FIG. 3. A first user may have a preference for main screen access to music 232 and recording of voice 234 (for example for weekend use) whereas during a work schedule may have a preference for different functions appearing on the main screen 240, such as FM radio 248, office functions 246, videos 244, and music 242. These display screens are only intended to be illustrative and not limiting. It is further understood that all features of the user interface may be modified in this manner including but not limited to the number of display screens in the sequence as well as. the features displayed in each of display screens following the main (or first) screen.

As illustrated in FIG. 3, the portable media player 310 is configured to update the user interface by accessing the remote server 320 storing the templates over the internet 322, for example by wirelessly connecting 316 to a wireless hub 318. In one embodiment, the media player 310 or other portable device 300 (such as a wireless phone) includes a "quick-connect" button 304 or 314 respectively that upon activation of the button automatically connects to the storage location that includes a plurality of templates (user interface definition files) for selection by the user for updating the user interface that is displayed using the respective display screens (302, 312) on the portable device.

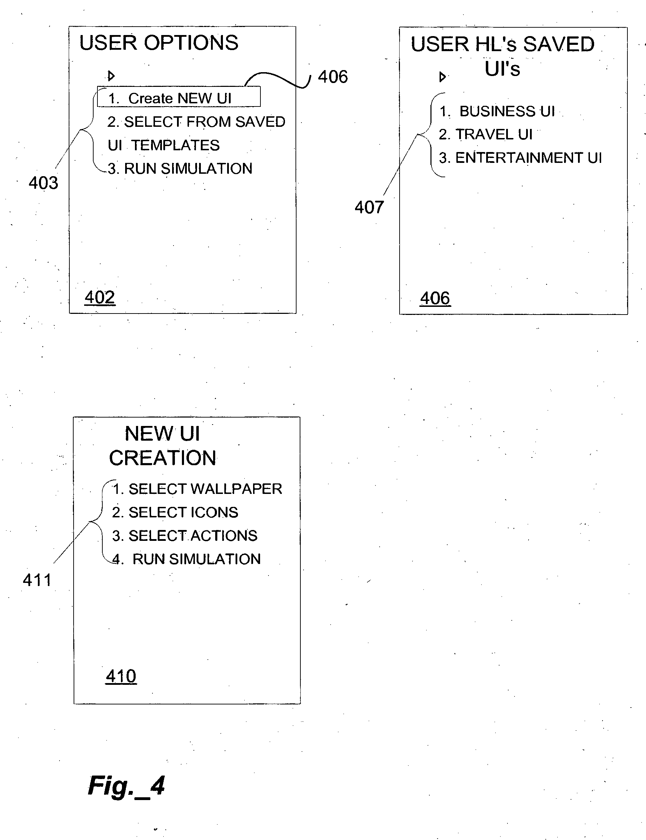

FIG. 4 is a diagram illustrating user interface options for a portable device in accordance with one embodiment of the present invention. Once the remote server 320 is accessed from preferably any internet capable device (e.g., a PC), the authoring tools residing on the remote server may be invoked. Screen 402 illustrates exemplary authoring tool screens provided to the user. For example, the user can choose between several UI configuration options 403, including at least the creation of a NEW UI template and selection from Saved UI templates. One advantage of making the author tools accessible form any internet capable device is flexibility. That is, the user is not limited to the smaller screen of the portable device but instead can use the larger screen capabilities of the PC (or other device) in interacting with the remote server's UI authoring tools, as well as the convenience of selection tools such as a computer mouse. The authoring tools are preferably configured to allow the user to run a simulation of the UI that the user has created. Preferably, this simulation would provide a demonstration of the user interface in operation, for example on the display screen of the device that accessed the remote server and its authoring tools.

Display screen 410 in FIG. 4 illustrates a sample display screen form a sample authoring tool, i.e., an example of menu options available to the user in creating a new User Interface template. The options 411 preferably available to the user can include (but are not limited to) selecting a background (wallpaper) for the portable device UI, selecting icons, selecting actions, and running a simulation of the proposed UI template design. One advantage of allowing the user to create the UI design for his portable device is that he can control how the portable device responds, i.e., how he can dictate the way the portable device acts in response to user actions such as selection of items such as icons. Typically a first step of the process involves selecting icons and selecting corresponding actions. For example (non-limiting) actions that may be associated with an icon include playing a song, displaying a selected data list such as restaurants and hotels, or providing navigation functions. The actions that may be associated with selecting an icon or other menu item is the display of a second display screen, which too can include icons and menus.

Once the user interface has been created, the user can save the user interface template file, either at the remote location, a second remote location, or locally. The local saved locations can include preferably the portable device but in other embodiments can include a second local location such as the hard drive of a PC available to the user. These examples of remote and local storage locations for UI template files are intended to be exemplary and not limiting as to the scope of the present invention.

As described earlier, the user created UI is preferable configured to provide filtering by at least geographic location, and more preferably by location and time. For example, as known to those of skill in the relevant arts, a user location can be determined or approximated by either WiFi triangulation or by Cellular phone (i.e., wireless phone) triangulation. Using either the space (location) parameter or time parameter, the user interface can intelligently be configured to , for example, display "Breakfast" restaurants in Venice , California when the user is driving in the proximity of Venice, CA in the morning hours and alternately display "Dinner" restaurants in Ventura when the user is later that day driving through Ventura, California. Accordingly, the user interface can be configured not only in the icons selected, the sequential presentation of display screens, but also in the time and location filtering of data items related to selected categories as described above.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A method of configuring the user interface of a portable electronic device (300), the method comprising:
accessing (102) a remote server (320) file that provides interactive instructions for the design of a portable device user interface;
customizing (104, 106) the design of the user interface using the interactive instructions;
assigning the customized design to a user interface template;
requesting storage of the user interface template at the remote server, wherein the remote server stores a plurality of user interface templates for selection by a user;
using the portable device to communicate (108) with the remote server that contains at least one user interface template previously customized for a unique portable electronic device;
selecting at least one of the at least one user interface templates; and
receiving (110) from the server, by downloading, the selected user interface template at the portable electronic device for controlling the configuration of the user interface on the portable device,
wherein after downloading, the user interface of the portable device is configured (112) in conformance with the customized design corresponding to the selected user interface template.

2. The method as recited in claim 1, wherein customizing (104, 106) the design of the user interface comprises selecting at least one icon and selecting the appearance position in a hierarchy of display screens

3. The method as recited in claim 1 or 2, wherein the accessing of the remote server file comprises using a PC to access tools available on the web.

4. The method as recited in any preceding claim, wherein the portable device (300) is one of a PDA, handheld media device, and mobile phone.

5. The method as recited in any preceding claim, wherein the communications link includes at least one of Wifi, Wimax, USB, and WAN links.

6. The method as recited in any preceding claim, wherein the portable device (300) is configured to automatically connect to a predefined URL corresponding to the remote server (320), access to the user interface template optionally being controlled using a unique ID assigned to one of the user and the portable device.

7. The method as recited in any preceding claim, wherein the customizing (104, 106) includes selecting shortcuts that appear in a first menu display screen, the number of display screens presented sequentially after the first, and the content of the display screens of the user interface, the shortcuts optionally being represented by one of text and icons.

8. The method as recited in claim 1, wherein the remote server (320) is accessed over the internet.

9. The method as recited in claim 1 or 8, wherein selecting the user interface template is performed automatically based on location information provided by the portable device (300).

10. The method as recited in claim 1, 8 or 9, wherein location dependant data associated with a selected user interface template is used to update the user interface displayed items in conjunction with a location of the portable device (300).

11. The method as recited in claim 10, wherein the display of data associated with the portable device user interface is filtered by at least one of time value and a geographic location value.

12. The method as recited in claim 11, wherein the portable device is configured to automatically provide at least one of the time value and a geographic location value to control the user interface configuration.

13. A portable electronic device (300) comprising:
a transceiver module configured to access a remote server (320) file that provides interactive instructions for the design of a portable device user interface;
a processor configured to customize the design of the user interface using the interactive instructions, assign the customized design to a user interface template and request storage of the user interface template at the remote server, wherein the remote server stores a plurality of user interface templates for selection by a user;
the transceiver being further configured to communicate with the remote server that contains at least one user interface template previously customized for a unique portable electronic device and to receive from the server, by downloading, a user interface template selected by the processor for controlling the configuration of the user interface on the portable device;
wherein after downloading the user interface of the portable device is configured in conformance with the customized design corresponding to the selected user interface template.

## Patentansprüche

1. Verfahren zum Konfigurieren der Benutzeroberfläche eines tragbaren elektronischen Gerätes (300), wobei das Verfahren Folgendes beinhaltet:
Zugreifen (102) auf eine Datei eines Fernservers (320), die interaktive Befehle für das Design der Benutzeroberfläche eines tragbaren Geräts bietet;
Individualisieren (104, 106) des Designs der Benutzeroberfläche unter Verwendung der interaktiven Befehle;
Zuordnen des individualisierten Designs zu einer Benutzeroberflächenschablone;
Anfordern der Speicherung der Benutzeroberflächenschablone am Fernserver, wobei der Fernserver mehrere Benutzeroberflächenschablonen zum Auswählen durch einen Benutzer speichert;
Benutzen des tragbaren Geräts zum Kommunizieren (108) mit dem Fernserver, der wenigstens eine Benutzeroberflächenschablone enthält, die zuvor für ein einziges tragbares elektronisches Gerät individualisiert wurde;
Auswählen wenigstens einer der wenigstens einen Benutzeroberflächenschablone; und
Empfangen (110), vom Server durch Herunterladen, der gewählten Benutzeroberflächenschablone an dem tragbaren elektronischen Gerät zum Steuern der Konfiguration der Benutzeroberfläche auf dem tragbaren Gerät,
wobei die Benutzeroberfläche des tragbaren Gerätes nach dem Herunterladen gemäß dem individualisierten Design entsprechend der gewählten Benutzeroberflächenschablone konfiguriert (112) wird.

2. Verfahren nach Anspruch 1, wobei das Individualisieren (104, 106) des Designs der Benutzeroberfläche das Auswählen wenigstens einem Icon und das Auswählen der Position des Erscheinens in einer Hierarchie von Anzeigeschirmen beinhaltet.

3. Verfahren nach Anspruch 1 oder 2, wobei das Zugreifen auf die Fernserverdatei die Benutzung eines PC zum Zugreifen auf auf dem Web verfügbare Tools beinhaltet.

4. Verfahren nach einem vorherigen Anspruch, wobei das tragbare Gerät (300) ein PDA, ein Hand-Mediagerät oder ein Mobiltelefon ist.

5. Verfahren nach einem vorherigen Anspruch, wobei die Kommunikationslink wenigstens eines aus WiFi, Wimax, USB und WAN-Links beinhaltet.

6. Verfahren nach einem vorherigen Anspruch, wobei das tragbare Gerät (300) zum automatischen Verbinden mit einem vordefinierten URL entsprechend dem Fernserver (320) konfiguriert ist, wobei der Zugriff auf die Benutzeroberflächenschablone ggf. mit einer eindeutigen ID gesteuert wird, die dem Benutzer oder dem tragbaren Gerät zugeordnet wird.

7. Verfahren nach einem vorherigen Anspruch, wobei das Individualisieren (104, 106) das Auswählen der in einem ersten Menüanzeigeschirm erscheinenden Kurzbefehlen, der Zahl der sequentiell nach dem ersten präsentierten Anzeigeschirme und des Inhalts der Anzeigschirme der Benutzeroberfläche beinhaltet, wobei die Kurzbefehle ggf. durch einen aus Text und Icons dargestellt werden.

8. Verfahren nach Anspruch 1, wobei auf den Fernserver (320) über das Internet zugegriffen wird.

9. Verfahren nach Anspruch 1 oder 8, wobei das Auswählen der Benutzeroberflächenschablone automatisch auf der Basis von von dem tragbaren Gerät (300) bereitgestellten Ortsinformationen erfolgt.

10. Verfahren nach Anspruch 1, 8 oder 9, wobei die mit einer gewählten Benutzeroberflächenschablone assoziierten ortsabhängigen Daten zum Aktualisieren der auf der Benutzeroberfläche angezeigten Elemente in Verbindung mit einem Ort des tragbaren Geräts (300) assoziiert sind.

11. Verfahren nach Anspruch 10, wobei die Anzeige von mit der Benutzeroberfläche des tragbaren Geräts assoziierten Daten durch einen Zeitwert und/oder einen geografischen Ortswert gefiltert wird.

12. Verfahren nach Anspruch 11, wobei das tragbare Gerät zum automatischen Bereitstellen eines Zeitwerts und/oder eines geografischen Ortswerts zum Steuern der Benutzeroberflächenkonfiguration konfiguriert ist.

13. Tragbares elektronisches Gerät (300), das Folgendes umfasst:
ein Transceiver-Modul, das zum Zugreifen auf eine Datei eines Fernservers (320) konfiguriert ist, die interaktive Befehle für das Design der Benutzeroberfläche eines tragbaren Geräts bereitstellt;
einen Prozessor, der zum Individualisieren des Designs der Benutzeroberfläche unter Verwendung der interaktiven Befehle, zum Zuordnen des individualisierten Designs zu einer Benutzeroberflächenschablone und zum Anfordern der Speicherung der Benutzeroberflächenschablone am Fernserver konfiguriert ist, wobei der Fernserver mehrere Benutzeroberflächenschablonen zur Auswahl durch einen Benutzer speichert;
wobei der Transceiver ferner zum Kommunizieren mit dem Fernserver, der wenigstens eine zuvor für ein individuelles tragbares elektronisches Gerät individualisierte Benutzeroberflächenschablone enthält, und zum Empfangen, von dem Server durch Herunterladen, einer von dem Prozessor ausgewählten Benutzeroberflächenschablone zum Steuern der Konfiguration der Benutzeroberfläche auf dem tragbaren Gerät konfiguriert ist;
wobei die Benutzeroberfläche des tragbaren Geräts nach dem Herunterladen gemäß dem individualisierten Design entsprechend der gewählten Benutzeroberflächenschablone konfiguriert wird.

## Revendications

1. Procédé de configuration de l'interface utilisateur d'un dispositif électronique portatif (300), le procédé comprenant les étapes consistant à :
accéder (102) à un fichier d'un serveur distant (320) qui fournit des instructions interactives pour la conception d'une interface utilisateur de dispositif portatif ;
personnaliser (104, 106) la conception de l'interface utilisateur en utilisant les instructions interactives ;
affecter la conception personnalisée à un modèle d'interface utilisateur ;
demander un stockage du modèle d'interface utilisateur au niveau du serveur distant, le serveur distant stockant une pluralité de modèles d'interface utilisateur en vue d'une sélection par un utilisateur ;
utiliser le dispositif portatif pour communiquer (108) avec le serveur distant qui contient au moins un modèle d'interface utilisateur précédemment personnalisé pour un dispositif électronique portatif unique ;
sélectionner au moins un modèle parmi les au moins un modèle d'interface utilisateur ; et
recevoir (110) par téléchargement, du serveur vers le dispositif électronique portatif, le modèle d'interface utilisateur sélectionné en vue de commander la configuration de l'interface utilisateur sur le dispositif portatif,
dans lequel, après téléchargement, l'interface utilisateur du dispositif portatif est configurée (112) en conformité avec la conception personnalisée correspondant au modèle d'interface utilisateur sélectionné.

2. Procédé selon la revendication 1, dans lequel l'étape de personnalisation (104, 106) de la conception de l'interface utilisateur comprend les étapes consistant à sélectionner au moins une icône et à sélectionner la position d'apparition dans une hiérarchie d'écrans d'affichage.

3. Procédé selon la revendication 1 ou 2, dans lequel l'étape d'accès au fichier de serveur distant comprend une étape consistant à utiliser un ordinateur personnel pour accéder à des outils disponibles sur la toile.

4. Procédé selon l'une quelconque des revendications précédentes, dans lequel le dispositif portatif (300) est un parmi un PDA, un périphérique portatif, et un téléphone mobile.

5. Procédé selon l'une quelconque des revendications précédentes, dans lequel la liaison de communication comprend au moins une parmi des liaisons Wifi, Wimax, USB et WAN.

6. Procédé selon l'une quelconque des revendications précédentes, dans lequel le dispositif portatif (300) est configuré pour se connecter de manière automatique à une URL prédéfinie correspondant au serveur distant (320), accéder au modèle d'interface utilisateur éventuellement commandé en utilisant un identifiant unique affecté à un parmi l'utilisateur et le dispositif portatif.

7. Procédé selon l'une quelconque des revendications précédentes, dans lequel l'étape de personnalisation (104, 106) comprend une étape consistant à sélectionner des raccourcis qui apparaissent sur un premier écran d'affichage de menu, le nombre d'écrans d'affichage présentés de manière successive après le premier, et le contenu d'écrans d'affichage de l'interface utilisateur, les raccourcis étant éventuellement représentés par du texte ou des icônes.

8. Procédé selon la revendication 1, dans lequel on accède au serveur distant (320) par l'intermédiaire de l'Internet.

9. Procédé selon la revendication 1 ou 8, dans lequel l'étape de sélection du modèle d'interface utilisateur est mise en oeuvre de manière automatique en se basant sur des informations d'emplacement fournies par le dispositif portatif (300).

10. Procédé selon l'une quelconque des revendications 1, 8 ou 9, dans lequel des données dépendantes de l'emplacement associées à un modèle d'interface utilisateur sélectionné sont utilisées pour mettre à jour les items affichés de l'interface utilisateur conjointement à un emplacement du dispositif portatif (300).

11. Procédé selon la revendication 10, dans lequel l'affichage de données associées à l'interface utilisateur de dispositif portatif est filtré grâce à au moins une valeur parmi une valeur temporelle et une valeur d'emplacement géographique.

12. Procédé selon la revendication 11, dans lequel le dispositif portatif est configuré pour fournir de manière automatique au moins une valeur parmi la valeur temporelle et une valeur d'emplacement géographique afin de commander la configuration d'interface utilisateur.

13. Dispositif électronique portatif (300) comprenant :
un module émetteur-récepteur configuré pour accéder à un fichier d'un serveur distant (320) qui fournit des instructions interactives pour la conception d'une interface utilisateur de dispositif portatif ;
un processeur configuré pour personnaliser la conception de l'interface utilisateur en utilisant les instructions interactives, affecter la conception personnalisée à un modèle d'interface utilisateur et demander un stockage du modèle d'interface utilisateur au niveau du serveur distant, le serveur distant stockant une pluralité de modèles d'interface utilisateur en vue d'une sélection par un utilisateur ;
l'émetteur-récepteur étant en outre configuré pour communiquer avec le serveur distant qui contient au moins un modèle d'interface utilisateur préalablement personnalisé pour un dispositif électronique portatif unique et pour recevoir du serveur, par téléchargement, un modèle d'interface utilisateur sélectionné par le processeur en vue de commander la configuration de l'interface utilisateur sur le dispositif portatif ;
dans lequel, après téléchargement, l'interface utilisateur du dispositif portatif est configurée en conformité avec la conception personnalisée correspondant au modèle d'interface utilisateur sélectionné.
